(19) Europäisches Patentamt
European Patent Office
Office européen des brevets

(11) Numéro de publication: **0 025 760**
**B1**

(12) **FASCICULE DE BREVET EUROPEEN**

(45) Date de publication du fascicule du brevet: **29.08.84**

(51) Int. Cl.$^3$: **G 06 K 9/50**

(21) Numéro de dépôt: **80401303.5**

(22) Date de dépôt: **11.09.80**

(54) **Procédé d'identification d'objets situés sur une surface et de détermination de paramètres desdits objets.**

(30) Priorité: **12.09.79 FR 7922761**

(43) Date de publication de la demande:
**25.03.81 Bulletin 81/12**

(45) Mention de la délivrance du brevet:
**29.08.84 Bulletin 84/35**

(84) Etats contractants désignés:
**CH DE GB LI NL**

(56) Documents cités:
**FR-A-2 179 421**
**US-A-3 349 372**
**US-A-3 408 485**
**US-A-3 999 047**
**US-A-4 183 013**

**PROCEEDINGS OF THE FOURTH INTERNATIONAL JOINT CONFERENCE ON PATTERN RECOGNITION, 7-10 Novembre 1978 Kyoto, JP, F. VEILLON: "One pass computation of morphological and geometrical properties of objects in digital pictures", pages 672-674**

(73) Titulaire: **COMMISSARIAT A L'ENERGIE ATOMIQUE Etablissement de Caractère Scientifique Technique et Industriel
B.P. 510
F-75752 Paris Cedex 15 (FR)**

(72) Inventeur: **David, Dominique
7, rue Les Diguières
F-38000 Grenoble (FR)**
Inventeur: **Delahais, Jean-François
22, rue des Bonnais Immeuble Plein Ciel
F-38120 Saint Egreve (FR)**
Inventeur: **Favier, Charles
171 rue Pierre Valdo
F-69005 Lyon (FR)**
Inventeur: **Glorieux, Francis
3, rue Kruger
F-38000 Grenoble (FR)**
Inventeur: **Robert, Gérard
2 rue Charles Ferré
F-38400 Saint Martin d'Heres (FR)**

(74) Mandataire: **Mongrédien, André et al
c/o BREVATOME 25, rue de Ponthieu
F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 025 760 B1

**Description**

La présente invention concerne un procédé pour l'identification et la détermination de paramètres d'objets situés sur une surface plane.

De façon plus précise, le procédé suivant l'invention permet l'identification d'objets plans disposés sur une surface plane et la détermination de certains paramètres liés à chacun de ces objets tels que leur périmètre, leur surface, etc., ces objets pouvant avoir une forme quelconque et une disposition quelconque sur ladite surface, deux objets étant séparés par une zone de ladite surface présentant une densité optique différente de celle desdits objets.

Le procédé de l'invention est du type dans lequel on éclaire la surface sur laquelle sont disposés lesdits objets, et on analyse ligne par ligne par exemple à l'aide d'une caméra vidéo, ou à l'aide de photodétecteurs ou composants analogues, les variations spatiales de l'intensité du faisceau lumineux ayant traversé ladite surface, c'est-à-dire qu'on détecte les variations de densité optique de ladite surface dues à la présence desdits objets. Plus précisément, notamment à l'aide d'une ou plusieurs lignes de photodétecteurs de photodiodes par exemple, on déplace globalement et par pas parallèlement à la longueur de la surface, une ligne recouvrant toute la largeur de la surface. Si pour chaque par de la ou des lignes de photodétecteurs, on recueille successivement le signal délivré par chaque photodétecteur, on obtient une "carte" de la densité optique de la surface, la carte étant constituée par la juxtaposition de surfaces élémentaires affectées d'une densité optique moyenne correspondant à l'énergie lumineuse reçue par un photodétecteur. Les coordonnées de chaque mesure sont définies par le rang de chaque photodétecteur et la position de la ligne de photodétecteurs par rapport à la surface. L'invention concerne le traitement de ces différentes mesures pour identifier chaque objet et pour en déterminer certains paramètres tels que leur périmètre, leur surface, etc.

Il existe de nombreux domaines où il est intéressant de faire une telle identification et de déterminer la valeur de tels paramètres, surtout lorsque ces objets sont en très grand nombre sur la surface et qu'ils ont des dimensions très réduites. Un exemple est constitué par l'analyse chromosomique.

Les analyses chromosomiques constituent actuellement un examen essentiel dans un grand nombre de sciences humaines et de disciplines, biologiques (génétique clinique, carcinologie, radio-pathologie, pédiatrie, etc.). Les analyses chromosomiques chez l'homme sont fondées sur une technique qui utilise une culture de lymphocytes sanguins, maintenue 48 heures en présence de l'antigène pHA (phytohaémagglutinine) et stoppée au bout de ce délai par l'introduction de colchicine. Un choc hypotonique permet alors de faire gonfler les cellules en cours de division (au stade métaphase de la mitose), séparant ainsi au mieux leurs chromosomes les uns des autres.

Au moment de la récolte, les quelques gouttes de culture sont étalées sur la lame porte-objet, et les cellules qu'elles contiennent épandent leurs chromosomes à la surface de la lame. Cependant, sur la totalité de la surface d'une préparation ainsi réalisée, le pourcentage des métaphases ayant leurs chromosomes bien dispersés est extrêmement faible, par rapport à l'ensemble des images non intéressantes, constituées en particulier par les noyaux de cellules non divisées et les mitoses inachevées.

Une première tâche du biologiste consiste donc dans un examen des différents échantillons pour sélectionner ceux qui présentent une méthaphase ayant ses chromosomes bien dispersés. Cette sélection des images convenables se fait au microscope en deux étapes: une première sélection grossière, suivie d'une sélection plus fine. Cette recherche est extrêmement longue et fastidieuse.

Bien entendu, d'autres applications peuvent être envisagées.

Pour résoudre ces problèmes, un premier but de l'invention est de réaliser un procédé du type décrit ci-dessus qui ne comporte qu'un minimum de fonctions mémoire pour traiter les informations recueillies en vue de calculer la valeur des différents paramères.

Un second but de l'invention est de réaliser un procédé du type décrit précédemment dans lequel la détermination de la valeur des différents paramètres associés aux différents objets à identifier est obtenue à l'aide d'un seul balayage de la surface à explorer à l'aide d'une matrice-colonne de photodétecteurs par exemple.

Un troisième but de l'invention est de réaliser un procédé du type décrit précédemment dans lequel on met en oeuvre un algorithme dit de connexité. En d'autres termes, il s'agit d'un dispositif qui permet d'identifier sans risque d'erreurs les différents objets placés sur ladite surface quelles que soient leur forme et leur orientation sur cette surface.

Un quatrième but de l'invention est de réaliser un procédé du type décrit précédemment dans lequel on peut effectuer le calcul de la valeur desdits paramètres associés auxdits objets en temps réel.

Un cinquième but de l'invention est de réaliser un procédé du type décrit ci-dessus grâce auquel on peut détecter non seulement les objets, mais également des "inclusions" dans ces objets, c'est-à-dire des portions de surface de ces objets où la densité optique est différente de celle de l'objet dans lequel elle se trouve. On comprend qu'une telle caractéristique est particulièrement intéressante dans le cas de l'analyse chromosomique.

Un sixième but de l'invention est de réaliser un procédé un type décrit ci-dessus dans lequel on

peut régler le jeu de seuils d'opacité optique pour adapter le dispositif au problème particulier à résoudre.

On connaît déjà par le brevet français 71 39422 déposé le 3 novembre 1971 au nom du demandeur un "Procédé et dispositif de sélection automatique d'images de chromosomes en cours de métaphase". Selon ce procédé, on balaye la surface à l'aide d'un alignement de photodétecteurs, ce qui donne un quadrillage optique de la surface. Pour chaque rectangle, on obtient ainsi une densité optique que l'on compare à un seuil pour affecter à chaque rectangle une valeur binaire. On applique à ce quadrillage un algorithme de décision permettant de reconnaître parmi les rectangles affectés de la valeur binaire 1 par exemple, une dispersion spatiale caractéristique.

Donc ce procédé ne permet pas une individualisation et une paramétrisation des objets. En outre, le dispositif de mise en oeuvre nécessite un grand nombre de positions de mémoire pour appliquer l'algorithme.

On connaît également un dispositif d'identification d'objets ou d'images qui met en oeuvre un algorithme dit de connexité, c'est-à-dire un algorithme qui permet de savoir si un rectangle de la ligne N appartient ou non à un objet qu'on a déjà commencé à identifier lors du balayage des lignes précédentes. A partir de ces informations, on peut déterminer pour chaque objet certains paramètres de celui-ci.

La présente invention permet d'utiliser un dispositif pour l'identification d'objets situés sur une surface plane et la détermination de paramètres desdits objets, ledit dispositif étant du type comprenant un alignement de photodétecteurs aptes à être déplacés transversalement audessus de ladite surface pour découper optiquement ladite surface en surfaces élémentaires limitées par un contour polygonal, ces surfaces étant disposées selon des lignes correspondant audit alignement et auxdites colonnes et étant susceptibles d'être repérées par des coordonnées, des moyens pour mesurer la densité optique de chaque surface élémentaire et pour associer à chaque surface élémentaire une valeur binaire selon ladite densité optique par rapport à un double seuil de densités optiques de référence, et des moyens pour détecter si des surfaces élémentaires affectées d'une même valeur binaire ont de proche en proche selon les lignes et/ou les colonnes au moins un côté commun, ces dites surfaces élémentaires étant alors dites "connexes" et correspondant à un même objet, ledit dispositif comprenant de manière connue:

— des moyens pour mémoriser simultanément la valeur binaire et les coordonnées des surfaces élémentaires,

— des moyens pour affecter une même référence aux surfaces élémentaires appartenant au même objet,

— des moyens pour comparer successivement par étapes lesdites valeurs binaires de chaque surface élémentaire (P) de la ligne N à celles (Q) des surfaces élémentaires de la ligne N—1 précédemment mémorisées et à celle de la surface (P—1) élémentaire précédente de la ligne N, et pour affecter à chaque surface élémentaire de ladite ligne (N) déterminée comme connexe à au moins une surface élémentaire précédemment analysée la même référence que celle de la ou des surfaces élémentaires connexes précédemment analysées,

— des moyens propres de mémorisation de la valeur instantanée des paramètres de chacun desdits objets,

— des moyens pour adresser successivement dans lesdites mémories propres les informations nécessaires au calcul de chaque paramètre pour les surfaces élémentaires définies à chaque étape de comparaison comme connexes aux surfaces élémentaires dont les informations ont déjà été mémorisées dans ladite mémoire propre, et

— des moyens de calcul et de mémorisation associés à chaque mémoire propre pour déterminer successivement la valeur instantanée desdits paramètres correspondant à l'introduction progressive desdites surfaces élémentaires et pour indiquer la valeur finale dudit paramètre associé à ou aux surfaces connexes adressées à une même mémoire propre lorsque ladite mémoire propre ne reçoit plus d'adressage durant la comparaison des surfaces élémentaires d'une ligne.

L'invention a pour objet un procédé d'identification d'objets situés sur une surface plane, et de détermination des paramètres de ces objets, adapté à des systèmes d'acquisition de données relatives à l'image de l'objet, dans lesquels ce procédé consiste:

— à découper la surface (2) à analyser en surfaces élémentaires (Si) limitées par un contour polygonal, disposées selon des lignes et des colonnes et pouvant être repérées par des coordonnées,

— à mesurer la densité optique de chaque surface élémentaire et à comparer cette densité à un jeu de densités de référence de façon à obtenir des valeurs binaires définissant l'appartenance de cette surface élémentaire à un objet, ou au fond de la surface sur laquelle est situé l'objet, l'identification étant réalisée par une analyse de connexité réalisée au fur et à mesure de l'acquisition des données, caractérisé en ce que cette analyse de connexité consiste:

— à mémoriser d'une part des informations relatives aux surfaces élémentaires d'une ligne courante qui constitue la frontière entre la partie déjà analysée et donc connue de l'image et la partie non encore connue de l'image et, d'autre part, à mémoriser les informations relatives à la surface élémentaire nouvellement acquise, les informations relatives aux surfaces élémentaires de ladite ligne étant la valeur binaire de chaque surface élémentaire de cette ligne et la référence de l'objet à laquelle

chaque surface appartient, cette référence étant le numéro de la colonne de l'objet qui est située dans la frontière, et qui sortira la dernière de cette frontière,

— à déterminer les nouvelles origines des surfaces élémentaires, compte tenu de la surface élémentaire en cours d'identification, cette identification étant effectuée selon un balayage en va-et-vient des lignes successives, de sorte que les lignes paires sont balayées dans un sens et que les lignes impaires sont balayées dans un autre sens, la détermination de la connexité se faisant entre trois surfaces élémentaires, P étant la dernière surface acquise, P—1 étant l'avant-dernière sur la même ligne que P et Q une surface appartenant à la même colonne que P mais à la ligne précédente, les références ou origines de P—1 et P étant alors déterminées comme la référence de la surface élémentaire appartenant au même connexe et qui sortira la dernière de la frontière, la référence ou origine de Q étant obtenue par des lectures successives dans une mémoire de référence $M_L$, ces lectures étant accompagnées d'une modification dans cette mémoire de façon à obtenir la référence ou origine définitive de Q en un nombre restreint de lectures, quelles que soient la complexité de l'objet et la longueur de la ligne d'analyse.

Bien entendu, il ne faut pas prendre les mots "lignes" et "colonnes" au sens strict. Les surfaces élémentaires sont contigues et peuvent avoir des formes variées : rectangles, hexagones . . . les mots "lignes" et "colonnes" correspondent respectivement à la direction de l'alignement des photodétecteurs et à la direction de dèplacement de cet alignement.

De même, les "coordonnéees" d'une surface élémentaire sont données par le rang du photodétecteur dans l'alignement et par la position de l'alignement par rapport à la surface à explorer.

Il découle de la définition précédente que lors du balayage de la ligne N par exemple, on donne une même adresse aux surfaces élémentaires de même valeur binaire et qui sont détectées comme connexes à certaines surfaces élémentaires précédemment balayées. Au cours du balayage en lignes et en colonnes, on stocke dans une même mémoire les informations relatives des surfaces élémentaires qu'on a affectées de la même référence. Cette adresse peut par exemple être constituée par l'origine des surfaces élémentaires connexes, c'est-à-dire par une surface élémentaire non connexe aux surfaces élémentaires précédemment balayées. Bien entendu, il se peut que l'on découvre en cours de balayage que deux ensembles connexes considérés jusqu'alors comme distincts, c'est-à-dire comme ayant des origines différentes ne forment en fait qu'un seul et même ensemble connexe. Dans ce cas, on réunit dans une même mémoire les coordonnées des surfaces élémentaires considérées jusqu'alors comme appartenant à des ensembles distincts et on leur affecte une adresse commune. Il va de soi que le calcul des divers paramètres portera sur le regroupement des surfaces élémentaires. Il faut cependant observer que même dans ce cas, il n'y a pas de "retour en arrière" du balayage de la surface à explorer.

Il faut également comprendre que par "référence" ou origine, il ne s'agit pas d'une adresse constituée par un nombre fixe. Il faut comprendre qu'il s'agit d'un élément d'identification des surfaces élémentaires appartenant à un même objet. Cette référence numérique peut varier lors du balayage de lignes différentes.

Il faut ajouter que parmi les paramètres, l'un de ceux-ci peut être le numéro de ligne de la dernière surface élémentaire appartenant à un objet donné. Il constitue alors un élément de localisation de l'objet sur la surface. Cela est particulièrement vrai lorsque ces objets sont de dimensions très réduites, la connaissance de la position d'un point de l'objet permettant alors de localiser l'objet.

En outre, la détermination de la connexité peut porter sur les surfaces élémentaires affectées de la valeur binaire 1 et sur les surfaces élémentaires affectées de la valeur binaire 0. Un tel mode de mise en oeuvre est intéressant lorsqu'il s'agit de prendre en compte des inclusions internes par exemple pour calculer la surface d'un objet compte tenu des inclusions.

Enfin, la détermination de la connexité peut porter sur des surfaces élémentaires de plus de deux types, correspondant à plus de deux niveaux de gris; en particulier, le passage de deux à trois niveaux de gris s'effectue avec un minimum de modifications du dispostif.

De toute façon, l'invention sera mieux comprise à la lecture de la description qui suit. La description se réfère aux figures annexées sur lesquelles:

— la figure 1 est une vue générale du dispositif complet, sous une forme simplifiée, mettant en oeuvre le procédé suivant l'invention,

— la figure 2 est un schéma montrant un exemple de réalisation de l'ensemble de traitement des données pour la mise en oeuvre de l'algorithme de connexité, et

— sur les figures 3*a* à 6*b* des schémas illustrant la mise en oeuvre d'un algorithme de connexité préféré,

— la figure 7 représente schématiquement les circuits associés à la mémoire de référence $M_L$, ces circuits permettant la détermination de l'origine d'un point Q par un traitement de la connexité de trois points pour lesquels seule l'origine du point Q est inconnue. Deux variantes de réalisation de ces circuits sont représentéessur cette figure.

Sur la figure 1, on trouve une vue simplifiée de l'ensemble d'identification et de détermination de paramètres. La référence 2 désigne la surface sur laquelle sont placés les objets ou le plus souvent une image de cette surface. D'un côté de la surface 2, on trouve une source lumineuse 4 et de l'autre côté une bande 6 de photodétecteurs 8 alignés qui sont par exemple des photodiodes (il y en a par exemple 1024). Des moyens schématisés par la référence 10 permettent de déplacer la surface 2 en regard des

photodiodes 8. Ces moyens peuvent être constitués par une table mobile selon deux directions orthogonales, les photodiodes étant fixes; c'est cette solution qui est adoptée dans la suite de la description. Ces moyens peuvent également servir à déplacer la bande 6 de photodiodes selon la direction Y uniquement, la bande 8 faisant alors toute la largeur de la surface selon la direction X. Dans tous les cas, il s'agit d'un déplacement relatif par pas qui définit par l'intermédiaire des photodétecteurs un quadrillage. Aux moyens de déplacement 10 est associé un moyen de codage de position 12 qui donne le numéro N des lignes (selon la direction Y). La position selon la direction X est donnée par le rang n de la photodiode.

Le signal électrique délivré par chaque photodiode a une amplitude qui est représentative de la densité optique de la surface élémentaire correspondant à la photodiode pour la position donnée de la bande 6. Ces signaux sont par exemple mis sous forme numérique et corrigés dans le circuit de traitement 14 après être passés dans l'électronique 16 associée aux photodiodes 8. Ces signaux sont ensuite introduits dans un circuit à double seuil 18 qui, pour chaque signal d'entrée, délivre un signal binaire 0 ou 1 selon le niveau du signal d'entrée par rapport à un jeu de densités optiques de référence. Au cours du balayage, on obtient donc successivement pour chaque surface élémentaire une valeur binaire correspondant à sa densité optique et des informations n et N constituant les coordonnées de la surface élémentaire considérée. Un dispositif de traitement 20, qui sera explicité ultérieurement, assure la mise en oeuvre de l'algorithme de connexité ainsi que le calcul des différents paramètres associés aux différents objets, c'est-à-dire aux différents ensembles de surfaces élémentaires connexes. Dès à présent, on peut indiquer que ce traitement peut être appliqué aux surfaces élémentaires ayant la valeur binaire 1 et aux surfaces élémentaires ayant la valeur binaire 0.

Un mini-calculateur 22 est relié au reste du dispositif par un coupleur 24. Ce mini-calculateur sert au dialogue avec l'utilisateur pour fixer les différents seuils et les paramètres de l'analyse, en début d'analyse; il sert également, en cours d'analyse, à mémoriser les informations définitives relatives aux objets retenus. Il peut également effectuer un traitement supplémentaire des résultats. Le dispositif de traitement 20 est associé au mini-calculateur 22.

En se référant à la figure 2, on va décrire plus en détail la structure de la partie du dispositif de traitement 20, effectuant le calcul des paramètres associés. On décrira ultérieurement en détail un exemple d'algorithme de connexité. Pour la présente description, il suffit de savoir que la mise en oeuvre de cet algorithme ne nécessite que la connaissance simultanée des valeurs binaires des surfaces élémentaires à l'intersection des colonnes n—1 et n et des lignes adjacentes N—1 et N. Le circuit 20 comprend une logique de connexité 30 qui reçoit la valeur binaire associée aux surfaces élémentaires à l'intersection des lignes N—1, N et des colonnes n—1, n et dont le fonctionnement sera décrit plus loin. Cette logique de connexité 30 comprend un micro-calculateur.

On trouve également une mémoire dite de référence 32 reliée à la logique 30 de connexité. La mémoire 32 reçoit une information correspondant aux coordonnées de la surface élémentaire en cours d'analyse. Par exemple, on analyse la surface (n, N). Cette mémoire 32 contient la valeur binaire des surfaces élémentaires de la ligne précédente N—1 avec les adresses (associées à chaque objet) déjà affectées à chaque surface élémentaire de la ligne N—1. La logique de connexité 30 est également reliée à une mémoire 34 qui contient les instructions pour la mise en oeuvre de l'algorithme de connexité.

Comme on l'a indiqué, le dispositif pouvant mettre en oeuvre l'objet de l'invention fait appel dans sa réalisation concrète à un micro-calculateur. La séparation en blocs peut donc être considérée comme un peut arbitraire. Il faut surtout y voir les fonctions qui sont mises en oeuvre. L'homme de l'art saura aisément les concrétiser. Par exemple, on peut considérer que les valeurs binaires associées aux surfaces élémentaires de la ligne N—1 et à la surface élémentaire n—1 de la ligne N sont directement prélevées dans la mémoire 32, seule l'information binaire correspondant à la surface élémentaire (n, N) et venant du circuit à seuil 18 étant appliquée à l'entrée proprement dite de la logique de connexité 30.

Comme on l'a déjà indiqué, le dispositif comprend des ensembles différents pour le calcul de chaque paramètre. Sur la figure 2, on a envisagé le calcul de plusieurs paramètres. L'ensemble de calcul des paramètres comprend des mémoires 36, ... 36' pour stocker les valeurs des paramètres pour chaque objet, c'est-à-dire pour chaque ensemble de surfaces élémentaires connexes en cours d'analyse. Il faut qu'il y ait autant de mémoires individuelles que d'objets différents susceptibles d'appartenir à une même ligne. On choisira un nombre de mémoires individuelles correspondant au plus grand nombre possible d'objets présents simultanément sur une même ligne. Bien entendu, chaque mémoire individuelle doit avoir un nombre suffisant de positions pour stocker la valeur numérique du paramètre ainsi que la référence de l'objet. Chaque ensemble de calcul de paramètre comprend également une unité arithmétique et logique 38 pour effectuer les calculs et une mémoire d'instruction 40 correspondant à la détermination d'un paramètre déterminé. Les blocs 38 et 40 font partie du microcalculateur.

Aprés que la logique de connexité a analysé une surface élémentaire et lui a affecté une adresse, cette adresse et les informations convenables liées à cette surface élémentaire sont envoyées vers les mémoires 36, ... 36' correspondant respectivement aux paramètres. Cette information nouvelle permet de poursuivre le calcul de la valeur des paramètres pour l'objet ayant la référence considérée.

Le type d'informations transmises dépend bien sûr du paramètre à calculer. Par exemple, dans le

cas du calcul de la surface, il s'agit d'incrémenter la valeur enregistrée dans la mémoire et de réunir deux objets jusque là non connexes.

Lorsque le balayage d'un objet est terminé, on vide les mémoires propres ayant permis le calcul des paramètres correspondant à cet objet.

On va maintenant décrire un exemple préféré d'algorithme de connexité. Cet algorithme peut être mis en oeuvre soit avec des surfaces élémentaires $S_i$ carrées (figure 3a ou 3b), soit avec des surfaces élémentaires $S'_i$ hexagonales (figure 3c).

Il est nécessaire de donner certaines définitions pour mieux faire comprendre cet algorithme.

On appelle surfaces voisines ou encore points voisins deux points dont la distance est inférieure ou égale à une valeur fixée $d_v$. Elle est liée au pas $d_e$ et à la forme des surfaces élémentaires. Sur la figure 3a, on a $d_v = d_e \times \sqrt{2}$ et il y a huit points voisins. Sur la figure 3b, on a $d_v = d_e$ et on a quatre points voisins. Sur la figure 3c, on a $d_v = d_e$ et on six points voisins.

On appelle connexe C (t), dans un ensemble I (t), un sous-ensemble d'éléments X de I (t) tels que:

— tous les X ont même valeur binaire

— pour tout couple (X, Y) de C (t), il existe une suite finie $X_1$ vérifiant les relations:

$X_1 = X$; $N_n = Y$

$i \varepsilon$ I,n; $X_i \varepsilon C$ (t)

$i \varepsilon$ I,n-1; $X_i$ et $X_{i+I}$ sont voisins

Une telle suite $X_i$ est appelée chemin de C (t) I (t) représentera, en fait, l'ensemble des points de l'image acquis à l'instant t.

*Frontière d'une image*

A chaque instant, on ne connaît, par définition de I (t), que des chemins qui y sont entièrement inclus; on a donc accès aux seuls connexes C (t) dans I (t).

Sur la figure 4a qui correspond à l'aquisition à l'instant $t_1$, on voit que les connexes P et Q sont séparés (cas d'une bande interrompue par exemple). Au contraire, sur la figure 4b (à l'instant $t_2$ avec $t_2 > t_1$), on voit que les connexes P et Q sont en fait réunis c'est-à-dire qu'ils ne forment qu'un seul et même connexe (cas d'une bande ininterrompue par exemple).

Soit un connexe dont on a vu les points et calculé les paramètres, toute l'information le concernant est maintenant inutile pour la suite du traitement. A chaque instant, on a uniquement besoin de l'information concernant l'ensemble des connexes, dans I (t) dont on n'a pas encore acquis tous les voisins. Ce sont les connexes pouvant être modifiés par l'arrivée des points suivants. On les appellera "connexes en cours". Ceci amène à définir la "frontière" de l'image à l'instant t : F (t) qui est l'ensemble des points de I (t) dont on a pas encore acquis tous les voisins.

Sur la figure 5a (surfaces carrées), la frontière F (t) comporte n+1 surfaces élémentaires ou points. Sur la figure 5b (surfaces élémentaires hexagonales), la frontière F (t) comporte n points. Dans tous les cas, chaque ligne comprend n surfaces élémentaires, c'est-à-dire que l'on a n photodiodes. Ces figures concernent par exemple un objet dont la surface n'est pas interrompue (cas de la figure 4b).

L'information nécessaire au fonctionnement de l'algorithme est de deux types:

— une information de "connexite" qui associe à chaque point de F (t) son "connexe en cours", dans I (t), inscrite dans la mémoire de référence ML,

— une information sur chaque connexe en cours, la valeur de ses paramètres à l'instant t, accessible dans la mémoire de calcul des paramètres MP.

On note $C_F (t) = C (t) \Omega F (t)$, l'ensemble des points du connexe C (t) appartenant à la frontière F (t). Par définition, pour tout connexe en cours $C_F (t) \neq \emptyset$.

Chaque connexe en cours C (t) sera représenté par un de ses points, noté $\omega$, choisi dans F (t) donc dans $C_F$ (t). On appellera ce point l'origine de C (t). A tout point P de F (t), on associe une adresse dans ML, correspondant à sa position dans la frontière. A cette adresse P, on associe dans ML, l'adresse $\omega$ de l'origine de P, donc le connexe C (t) auquel il appartient. A cette adresse $\omega$ dans MP sont écrites les valeurs des paramètres de C (t).

Ainsi dans ML, peut-on accéder à l'origine de chaque point de F (t) donc à sa composante connexe; puis, dans MP, aux paramètres de ce connexe. Une manière simple de définir $\omega$ est de se donner une relation d'ordre total S sur F (t), donc sur $C_F$ (t), et de prendre $\omega = \mathrm{Sup}_s C_F (t)$. Par la suite, on dira que cette relation est "d'ordre S".

*Organisation de la mémoire de référence ML*

Si on écrit directement dans ML, à l'adresse de chaque point celle de son origine $ML (M) = \omega (M)$. Toute modification d'origine d'un connexe nécessite autant d'écritures qu'il a de points dans F (t). Ceci est incompatible avec un traitement en temps réel. Pour n'effectuer qu'une seule écriture, on procède ainsi: lors d'un changement d'origine, seule l'ancienne origine $O_1$ est reliée à la nouvelle $O_2 = \omega$ ML $(O_1) = O_2$. On dispose ainsi à chaque instant d'une suite $O_i$, de points de F (t), liant chaque point M de F (t) à son origine

$$M \to ML(M) = O_1 \to ML^2 (M) = O_2 \to \ldots\ldots \to ML^k (M) = O_k = \omega \to \omega$$

Si M a subi k—1 changements d'origine.

Les origines étant définies par $\omega = \text{Sup}_s\, C_F(t)$ et par construction de ML, on a pour tout point M de F (t) *ML (M)* $\underset{s}{>}$ *M* et pour les Oi, liant M à son origine $\omega$

$$M \underset{s}{<} O_1 \underset{s}{\leq} O_2 \underset{s}{\leq} \ldots\ldots\ldots\ldots\ldots \underset{s}{<} O_{k-1} \underset{s}{<} \omega$$

Sur la figure 6a, $C_1$ (t—1) et $C_2$ (t—1) sont deux connexes différents; on a donc deux origines $\omega$ et $\omega'$. Cette figure concerne par exemple un objet dont la surface est interrompue (cas de la figure 4a).

Sur la figure 6b qui correspond à l'instant t, les deux connexes $C_1$ et $C_2$ sont devenus un seul et même connexe C (t) et donc la même origine $\omega$ pour les $P_i$ ($C_2$) et les $M_i$ ($C_1$). La figure 6b concerne par exemple un objet dont la surface n'est pas interrompue (cas de la figure 4b).

*Définition de l'ordre S*

Soit P le dernier point acquis et P' le point, donc il prend la place dans ML (et dans Ft). La liaison P' → ML (P') doit être remplacée par P → ML (P) = $\omega$ (P). S'il existe dans F (t) des antécédents R de P': ML (R) = P', il faut pour ces points réécrire, dans ML, la liaison R → .... → $\omega$ (R) qui passait par P'. Pour éviter ces écritures, on choisit pour S l'ordre de sortie des points de F (t), P' est alors l'$\text{Inf}_s$ F (t) et ne peut avoir d'antécédent.

On peut maintenant définir l'origine de C (t) comme le dernier point de $C_F$ (t) à sortir de F (t).

*Choix du mode de balayage*

On utilise un balayage va-et-vient suivant lequel les lignes paires sont balayées dans un sens et les lignes impaires dans l'autre sens (sens de balayage alterné). L'origine d'un connexe change alors dans deux cas:

— à l'acquisition d'un point reliant deux connexes précédemment disjoints,

— à l'acquisition du premier point du connexe dans une nouvelle colonne.

Dans les deux cas, on montre que le point Qi à l'arrivée duquel on écrit ML ($O_i$-I) = $O_i$ sortira de F (t) après le point Qi+I (s'il existe) où on écrit ML($O_i$) = $O_i$+I. Donc pour tous M$\varepsilon$F (t) (d'ordre k) M → $O_1$ → $O_2$ → $O_k = \omega$. Il existe une suite $Q_i$ ML ($Q_i$) = $O_i$ et $Q_i \underset{s}{\geq} Q_{i+1}$ $\varepsilon$I,k-I ($Q_1$ = M). C'est l'existence de cette suite, due au mode de balayage choisi et à la géométrie des chemins de connexité qui permettra, par la suite, de calculer en un nombre fixe d'opérations l'origine de chaque point.

On va maintenant décrire le fonctionnement de l'algorithme ainsi défini.

1) Détermination de l'origine du nouveau point P

Soient ($\omega$j) les origines des voisins (Pj) connexes de P : $\omega$ (p) = $\text{Sup}_s$ ($\omega_j$,P). Connaissant le balayage à cet instant, les comparaisons au sens de S se remènent à des comparaisons entre adresses dans ML.

2) Calcul des $\omega_j$

P a un voisin dans la dernière ligne et de 1 à 3 dans l'avant-dernière (selon la forme de la surface élémentaire). Le voisin de la dernière ligne est le dernier point traité avant P; son origine vient d'être calculée [$\omega$(P—1)]. Seule l'origine du point Q, de l'avant dernière ligne venant d'entrer dans le voisinage de P n'est pas directement accessible (les autres ont été calculées aux deux étapes précédentes). Il faut aller la chercher dans ML, avec autant de lectures k qu'il y a d'indirections:

$$Q \rightarrow O_1 \rightarrow O_2 \rightarrow \ldots . \rightarrow O_k = ML^k\,(Q) = \omega.$$

Grâce à l'existence de la suite $Q_i$, on évite un nombre indéterminé de lectures en effectuant le traitement suivant:

A l'entrée de chaque point dans le voisinage du dernier point acquis, dans l'avant dernière ligne (en particulier pour les $Q_i$), on effectue les opérations suivantes:

Suivant les connexités entre Q, P et P—1

a) Si Q n'est pas connexe à P ou à P—1, on effectue la lecture de ML (Qi), $ML^2$ (Qi) et $ML^3$ (Qi) et l'écriture de $ML^3$ (Qi) à l'adresse ML (Qi).

Etant donné l'ordre d'apparition des Qi, on obtient les opérations suivantes:

| Lecture | Lecture | Lecture | Ecriture |
|---|---|---|---|
| $Q_k \rightarrow O_k = \omega$ | $\rightarrow \omega$ | $\rightarrow \omega$ | $ML(\omega) = \omega$ |
| $Q_{k-1} \rightarrow \quad O_{k-1}$ | $\rightarrow O_k = \omega$ | $\rightarrow \omega$ | $ML(O_{k-1}) = \omega$ |
| $Q_{k-2} \rightarrow \quad O_{k-2}$ | $\rightarrow O_{k-1}$ | $\rightarrow \omega$ | $ML(O_{k-2}) = \omega$ |
| $Q = Q_1 \rightarrow O_1$ | $\rightarrow O_2$ | $\rightarrow \omega$ | $ML(O_I) = \omega$ |

On connaît ainsi l'origine de Q après trois lectures ($ML^3(\omega)$) et une écriture.

b) Si Q est connexe à P—1, seule l'écriture à ML (Qi) est changée; on écrit alors

$$Sup_s\ [ML^3\ (Q_i),\ \omega\ (P-1)]$$

c) Si Q n'est pas connexe à P—1, mais est connexe à P, on écrit alors à l'adresse ML (Qi)

$$Sup_s\ [ML^3\ (Qi),\ \omega\ (P)]$$

On peut ne pas différencier ces trois cas en effectuant quatre lectures successives de ML $[Q_i]$ et en réécrivant automatiquement $ML^4$ $[Q_i]$ à l'adresse ML $[Q_i]$

La détermination de l'origine d'un point Q peut être effectuée grâce à des circuits qui sont associés à la mémoire de référence ML (mémoire 32 de la figure 2). Ces circuits représentés sur la figure 7 permettent de déterminer l'origine d'un point Q par un traitement de la connexité des trois points Q, P, P—1 pour lesquels seule l'origine du point Q est inconnue. Sur cette figure, deux variantes de réalisation de ces circuits sont représentées.

Selon la première variante de réalisation, ces circuits comprennent un multiplexeur de données 50 et un multiplexeur d'adresses 51 qui commandent l'inscription de données à des adresses déterminées dans la mémoire ML. Ces deux multiplexeurs permettent d'inscire dans la mémoire ML, à des adresses $\omega_p$ et $\omega_{p-1}$, les coordonnées respectives des origines $\omega$ des points P et P—1. Ces données sont fournies aux multiplexeurs par la logique de connexité 30 de la figure 2, non représentée sur cette figure. Ces circuits comprennent également dans cette première variante de réalisation, trois registres A, B, C, connectés en cascade, à la sortie de la mémoire ML. Les sorties des registres A et C sont en outre reliées aux entrées des multiplexeurs 50, 51. Le tableau ci-dessous permet de mieux comprendre le fonctionnement des circuits, pour cette première variante de réalisation des circuits associés à la mémoire ML. Dans ce tableau, [A], [B], [C], représentent les contenus des registres A, B, C. ML($\omega$) désigne le contenu de la mémoire de référence ML à l'adresse $\omega$;$ML^2(\omega)$ désigne le contenu de la mémoire à l'adresse ML($\omega$). Les troisième, quatrième, cinquième colonnes du tableau sont relatives à la mémoire, tandis que la dernière colonne indique les principales opérations effectuées par les circuits décrits pour obtenir l'origine du point Q.

| | | | Mémoire | | | |
|---|---|---|---|---|---|---|
| [A] | [B] | [C] | Adresses | Entrées | Sorties | Opérations |
| ML ($\omega$) | | | $\omega$ | | ML ($\omega$) | Lecture mémoire et transfert dans registre |
| $ML^2$ ($\omega$) | ML ($\omega$) | | [A]= ML ($\omega$) | | $ML^2$ ($\omega$) | ,, |
| $ML^3$ ($\omega$) | $ML^2$ ($\omega$) | ML ($\omega$) | [A] = $ML^2$ ($\omega$) | | $ML^3$ ($\omega$) | ,, |
| $ML^3$ ($\omega$) | $ML^2$ ($\omega$) | ML ($\omega$) | [C] = ML ($\omega$) | $ML^3$ ($\omega$) ou $\omega$ ou $\omega$(p—1) | | Ecriture mémoire |

Grâce aux circuits de cette première variante de réalisation, l'origine du point Q se trouve dans le registre A après trois lectures [$ML^3(\omega)$].

Selon la seconde variante de réalisation, les circuits associés à la mémoire de référence ML comprennent, en plus des multiplexeurs 50, 51 et des trois registres A, B, C, un quatrième registre D, connecté en cascade avec les trois premiers. La sortie de ce registre est reliée aux entrées des multiplexeurs. La tableau ci-joint permet de mieux comprendre le fonctionnement de ces circuits selon cette seconde variante. Les notations utilisées dans ce tableau, ont les mêmes significations que dans le tableau précédent et [D] représente le contenu du registre D.

Ce tableau montre que l'origine du point Q est contenue dans le registre A [$ML^4(\omega)$], après quatre lectures successives.

Les circuits associés à la mémoire de référence peuvent être utilisés pour déterminer la connexité, après avoire déterminé l'origine du point Q, en effectuant les opérations suivantes, selon la configuration des points Q, P et P—1 effectés des valeurs binaires 0 ou 1:

| | | | | | |
|---|---|---|---|---|---|
| | P | | 0 | | 1 |
| — configuration Q | | 1 | | ou 0 | |
| | P—1 | | 1 | | 0 |

dans ce cas, l'origine de P $=\omega$
l'origine de P—1 $=$ Sup $[\omega(p{=}1),\ \omega\ (Q)]$

| | | | | | |
|---|---|---|---|---|---|
| | P | | 1 | | 0 |
| — configuration Q | | 0 | | ou 1 | |
| | P—1 | | 1 | | 0 |

dans ce cas, l'origine de P = origine de P—1

| | | | | | |
|---|---|---|---|---|---|
| | P | | 1 | | 0 |
| — configuration Q | | 1 | | ou 0 | |
| | P—1 | | 0 | | 1 |

dans ce cas, l'origine de P $=$ Sup $[\omega,\ \omega\ (Q)]$

| | | | | | |
|---|---|---|---|---|---|
| | P | | 1 | | 0 |
| — configuration Q | | 1 | | ou 0 | |
| | P—1 | | 1 | | 0 |

dans ce cas, l'origine de P $=$ Sup $[\omega\ (p{=}1),\ \omega\ (Q)]$

| | | | | Mémoire | | | |
|---|---|---|---|---|---|---|---|
| [A] | [B] | [C] | [D] | Adresses | Entrées | Sorties | Opérations |
| ML $(\omega)$ | | | | $\omega$ | | ML $(\omega)$ | Lecture mémoire et transfert dans registre. |
| $ML^2$ $(\omega)$ | ML $(\omega)$ | | | [A] = ML $(\omega)$ | | $ML^2$ $(\omega)$ | " |
| $ML^3$ $(\omega)$ | $ML^2$ $(\omega)$ | ML $(\omega)$ | | [A] = $ML^2$ $(\omega)$ | | $ML^3$ $(\omega)$ | " |
| $ML^4$ $(\omega)$ | $ML^3$ $(\omega)$ | $ML^2$ $(\omega)$ | ML $(\omega)$ | [A] = $ML^3$ $(\omega)$ | | $ML^4$ $(\omega)$ | " |
| $ML^4$ $(\omega)$ | $ML^2$ $(\omega)$ | $ML^2$ $(\omega)$ | ML $(\omega)$ | [D] = ML $(\omega)$ | [A] = $ML^4$ $(\omega)$ | | Ecriture mémoire |

Ce type de traitement permet de traiter à la fois les objets noirs et les objets blancs.

3) Modifications de la mémoire de liaison.
Pour chaque $\omega_j$ différente de $\omega$, on écrit ML $(\omega_j) = \omega$.

4) Calcul des paramètres.
Dans les cas de changement d'origine, on regroupe les paramètres rangés aux adresses $\omega_j$, dans la mémoire de référence, avec ceux contenus à l'adresse $\omega$. Dans tous les cas, on incrémente les paramètres à l'adresse $\omega$, en fonction de P et de son voisinage, selon le paramètre calculé.

5) Fin d'objet.
Si Q, point sortant de F (t) n'est pas connexe au nouveau point P, et si ML (Q) = Q, c'est alors le dernier point d'un connexe dont les paramètres sont rangés en MP (Q).

On peut maintenant calculer pour chaque connexe, c'est-à-dire pour chaque objet, l'ensemble de ses paramètres "locaux". Ce sont les paramètres dont la variation, à l'arrivée de chaque nouveau point est uniquement fonction du voisinage immédiate de ce point:

— Surface, périmètre, nombre d'inclusions (trous), convexité (dans trois ou quatre directions selon la maille), centre de gravité, polygones d'encadrements (rectangles, octogones ou hexagones).

A partir de ces paramètres de base, on peut en calculer d'autres en utilisant la connaissance à la fin de chaque connexe, du connexe dans lequel il est inclus. Ainsi, pour le périmètre extérieur obtenu en obtant au périmètre celui de chacune de ses inclusions, on calcule ainsi:

— Surface totale (inclusions comprises), périmètre extérieur, nombre total d'inclusions. Si on donne accès aux niveaux de gris du voisinage du dernier point, on calcule aussi:

— Surface pondérée, niveau de gris moyen, gradient moyen sur chaque connexe et sur l'ensemble de ses inclusions.

Il découle de la description de l'exemple particulier précédent qu'il faut mémoriser une ligne de surfaces élémentaires et deux surfaces élémentaires d'une autre ligne. On pourrait également utiliser une mémoire supplémentaire contenant les informations relatives à une ligne complète. En appliquant un algorithme de connexité différent, on pourrait ne pas faire fonctionner le dispositif en utilisant seulement quatre surfaces élémentaires, mais en travaillant directement sur des segments de surfaces élémentaires.

De plus, dans l'exemple particulier décrit, un objet est repéré (adresse) par son origine. Si l'on considère les coordonnées de cette origine (par exemple le numéro de la ligne), cette donnée peut être considérée comme un nouveau paramètre de l'objet qui permet d'identifier celui-ci.

Enfin, si l'on admet des erreurs sur l'identification d'objets de forme trop complexe, il est possible de réduire le nombre de lectures dans la mémoire de référence ML.

On pourra se reporter aux articles suivants, pour une meilleure compréhension de cette technique d'identification d'objets:

J. Serra: Lectures on image analysis by mathematical morphology (cours de morphologie mathématique de l'Ecole des Mines).

D'autres articles décrivent des procédés connus d'analyse d'image par connexité.

Ces procédés opèrant de diverses manières:

a) — soit sur une image mémorisée d'où l'on extrait les objets les uns après les autres par dilatation dans l'objet du premier point trouvé appartenant à un objet. Ce mode opératoire est décrit dans les articles suivants:

— Sequential operations in digital picture processing A. ROSENFELD, J.L. PFALTZ.
Journal of the association for computing machinery (Oct. 66) p. 471—494.

— Connectivity in digital pictures A. ROSENFELD.
Journal of the Association for Computing Machinery (Janv. 70) p. 146—160.

b) — soit sur deux lignes successives et résolvant la connexité par analyse des cordes des objets dans ces deux lignes. Ce mode opératoire est décrit dans les articles suivants:

— Une méthode de calcul en un passage de plusieurs propriétés topologiques et géometriques d'objets dans des images digitalisées F. VEILLON.
Rapport de recherche N° 67, — Laboratoire IMAG Grenoble, Janv. 77 et Congrès AFCET—IRIA: reconnaissance des formes et traitement des images (Fév. 78) p. 411—420.

— brevet français 2 179 421.

c) — soit avec une seule ligne d'image mémorisée, la connexité étant traitée par analyse de trois ou quatre points voisins (deux sur une ligne et un ou deux sur l'autre).

Ce procédé a l'avantage de permettre un traitement de l'image au fur et à mesure de son acquisition. Il est décrit dans le brevet US N° 3,999,047. Il ne permet pas de résoudre la connexité pour des objets complexes. L'algorithme décrit dans ce brevet n'est pas du tout comparable à celui du procédé de l'invention.

**Revendications**

1. Procédé d'identification d'objets situés sur une surface plane, et de détermination de paramètres de ces objets, adapté à des systèmes d'acquisition de données relatives à l'image de l'objet, dans lesquels ce procédé consiste:

— à découper la surface (2) à analyser en surfaces élémentaires (Si) limitées par un contour polygonal, disposées selon des lignes et des colonnes et pouvant être repérées par des coordonnées,

— à mesurer la densité optique de chaque surface élémentaire et à comparer cette densité à un jeu de densités de référence de façon à obtenir des valeurs binaires définissant l'appartenance de cette surface élémentaire à un objet, ou au fond de la surface sur laquelle est situé l'objet, l'identification étant effectuée par une analyse de connexité réalisée au fur et à mesure de l'acquisition des données, caractérisé en ce que cette analyse de connexité consiste:

— à mémoriser d'une part des informations relatives aux surfaces élémentaires d'une ligne courante qui constitue la frontière entre la partie déjà analysée et donc connue de l'image et la partie non encore connue de l'image et, d'autre part, à mémoriser les informations relatives à une surface élémentaire de la ligne suivante, les informations relatives aux surfaces élémentaires de ladite ligne étant les valeurs binaires de chaque surface élémentaire de cette ligne et la référence ou origine de l'objet à laquelle chaque surface appartient, cette référence étant le numéro de la colonne de l'objet qui est située dans la frontière, et qui sortira la dernière de cette frontière,

— à déterminer les nouvelles origines des surfaces élémentaires, compte tenu de la surface élémentaire en cours d'identification, cette identification étant effectuée selon un balayage en va-et-vient des lignes successives, de sorte que les lignes paires sont balayées dans un sens et que les lignes impaires sont balayées dans un autre sens, la détermination de la connexité se faisant entre trois surfaces élémentaires P, P—1, Q, P étant la dernière surface acquise, P—1 étant l'avant-dernière sur la même ligne que P et Q la surface appartenant à la même colonne que P mais à la ligne précédente, les références ou origines de P—1 et P étant alors déterminées comme la référence de la surface élémentaire appartenant au même connexe qui sortira la dernière de la frontière, la référence ou origine de Q étant obtenue par des lectures successives dans une mémoire de référence (ML), ces lectures étant accompagnées d'une modification dans cette mémoire, grâce à laquelle les références ou origines des $Q_i$ recontrés successivement sont obtenus en un nombre restreint de lectures, quelles que soient la complexité de l'objet et la longueur de la ligne d'analyse.

2. Procédé selon la revendication 1, caractérisé en ce que l'origine de Q est obtenue par trois lectures successives, suivies de la réécriture à l'adresse (ML ($\omega$)) de la mémoire de référence (ML), de l'origine de la surface élémentaire qui est connexe à la surface élémentaire Q et qui sortira la dernière de la frontière parmi les origines de Q, de P—1 et de P.

3. Procédé selon la revendication 1, caractérisé en ce que l'origine de Q est obtenue par quatre lectures successives suivies d'une réécriture automatique de l'origine de Q, à une adresse (ML ($\omega$)), de la mémoire de référence (ML).

4. Procédé selon la revendication 1, caractérisé en ce que la détermination de la connexité des surfaces élémentaires porte sur les surfaces élémentaires affectées d'une première valeur binaire et sur les surfaces élémentaires affectées d'une deuxième valeur binaire.

**Claims**

1. Process for the identification of objects located on a flat surface, and for the determination of parameters of these objects, adapted for acquisition systems for data relating to the image of the object, wherein said process comprises:—

— dividing the surface (2) to be analyzed into surface elements (Si) bounded by a polygonal contour, running along lines and columns and capable of being defined by coordinates,

— measuring the optical density of each surface element, and comparing said density with a set of reference densities whereby to obtain digital values indicative of whether said surface element forms part of an object or of the surface on which the object lies, identification being achieved by analysis of connexity determined during the course of data-acquisition, characterized in that said analysis of connexity comprises:

— memorizing, on the one hand, data relative to the surface elements of a current line constituting the boundary between the part of the image already analyzed, and thereby known, and the part of the image that is not yet known, and, on the other hand, memorizing data relative to a surface element of the following line, the data relative to the surface elements of said line being digital data for each surface element of said line and the reference for the origin of the object to which said surface belongs, said coordinates being the number of the column on which the boundary lies and which appears last at said boundary,

— determining new origins of the surface elements, taking account of the surface element in course of identification, said identification being effected by back-and-forth sweeping of successive lines, whereby even-numbered lines are swept in one sense and odd-numbered lines are swept in another sense, determination of connexity involving three surface elements P, P—1, and Q, P being the

surface element last acquired. P—1 being the previous one on the same line as P, and Q being the surface element lying in the same column as P but on the previous line, the references where P—1 and P originate being thereby determined as the reference of the surface element of the same connexity appearing last at the boundary, the reference of origin of Q being obtained by successive reading from a reference memory (ML), said readings being accompanied by modification of said memory whereby the references of origin of successively encountered $Q_i$ are obtained in a limited number of readings, whatever the complexity of the object and the length of the line to be analyzed.

2. Process according to Claim 1, characterized in that the origin of Q is obtained by three successive readings, followed by rewriting of the address (ML (W)) in the reference memory (ML) of the origin of the surface element selected from Q, P—1 and P which is in connexion with the surface element Q and which last appears at the boundary.

3. Process according to Claim 1, characterized in that the origin of Q is obtained by four successive readings, followed by automatic rewriting of the origin of Q, at an address (ML (W)) of the reference memory (ML).

4. Process according to Claim 1, characterized in that determination of connexity of surface elements follows from surface elements having a first digital value and from surface elements having a second digital value.

**Patentansprüche**

1. Verfahren zur Identifikation sich auf einer Oberfläche befindender Objekte und zur Bestimmung der Parameter dieser Objekte, wobei das Verfahren an Erfassungssysteme von Daten bezüglich des Bildes des Objektes angepaßt ist, bei denen das Verfahren darin besteht, daß

— die zu analysierende Oberfläche (2) in durch Linienzüge begrenzte Elementarflächen (Si) unterteilt wird, die in Reihen und Spalten angeordnet sind und durch Koordinaten lokalisiert werden können,

— die optische Dichte jeder Elementarfläche gemessen und diese Dichte mit einem Satz von Bezugsdichten derart verglichen wird, daß Binärwerte erhalten werden, die die Zugehörigkeit dieser Elementarfläche zu einem Objekt oder zu dem Untergrund der Oberfläche festlegen, auf der sich das Objekt befindet, wobei die Identifikation entsprechend der Erfassung der Daten mittels einer Zusammenhangsnalyse durchgeführt wird, dadurch gekennzeichnet, daß die Zusammenhangsanalyse darin besteht, daß

— einerseits Informationen in bezug auf Elementarflächen einer laufenden Zeile, die die Grenze zwischen dem bereits analysierten und damit bekannten Teil des Bildes und dem noch unbekannten Teil des Bildes bildet, und andererseits Informationen in bezug auf eine Elementarfläche der folgenden Zeile gespeichert werden, wobei die Informationen in bezug auf die Elementarflächen der genannten Zeile die Binärwerte jeder Elementarfläche dieser Zeile und des Bezuges oder Ursprungs des Objektes sind, zu dem jede Fläche gehört, wobei dieser Bezug die Nummer der Spalte des Objektes ist, welche sich in der Grenze befindet und die als letzte von dieser Grenze herauskommt,

— die neuen Ursprünge dieser Elementarflächen unter Berücksichtigung der sich im Laufe der Identifikation befindenden Elementarfläche bestimmt werden, wobei diese Identifikation mit einem hin- und hergehenden Abtastvorgang aufeinanderfolgender Zeilen derart durchgefuhrt wird, daß die geradzahligen Zeilen in einem Sinn und die ungeradzahligen Zeilen in einem anderen Sinn abgetastet werden und die Bestimmung des Zusammenhanges zwischen drei Elementarflächen (P, P—1, Q) vorgenommen wird, von denen P die letzte erfaßte Flächen, P—1 die auf der gleichen Zeile wie P liegende, vorletzte Fläche und Q die zu der gleichen Spalte wie P aber zu der vorhergehenden Zeile gehörende Fläche ist, wobei die Bezugswerte oder Ursprünge von P—1 und P dann wie der Bezugswert der Elementarfläche, die zu demselben Zusammenhang gehört, der als letzter von der Grenze herauskommt, bestimmt werden und der Bezugswert oder Ursprung von Q durch aufeinanderfolgende Lesevorgänge in einem Bezugsspeicher ML erhalten wird, die von einer Abänderung in diesem Speicher begleitet werden, dank welcher die Bezugswerte oder Ursprünge der aufeinanderfolgend angetroffenen $Q_i$ mittels einer begrenzten Anzahl von Lesevorgängen erhalten werden und zwar unabhängig von der Komplexizität des Objektes und der Länge der Analysenzeile.

2. Verfahren nach Anspruch 1, dadurch gekennzeichnet, daß der Ursprung von Q mit drei aufeinanderfolgenden Lesevorgängen erhalten wird, denen das Wiedereinschreiben an der Adresse (ML ($\omega$)) des Bezugsspeichers (ML) des Ursprungs der Elementarfläche folgt, welche mit der Elementarfläche Q zusammenhängt und die als letzte unter den Ursprüngen von Q, von P—1 und von P von der Grenze herauskommt.

3. Verfahren nach Anspruch 1, dadurch gekennzeichnet, daß der Ursprung von Q durch vier aufeinanderfolgende Lesevorgänge erhalten wird, denen ein automatisches Wiedereinschreiben des Ursprungs von Q an einer Adresse (ML ($\omega$)) des Bezugsspeichers (ML) folgt.

4. Verfahren nach Anspruch 1, dadurch gekennzeichnet, daß sich das Feststellen des Zusammenhanges der Elementarflächen auf die Elementarflächen, denen ein erster Binärwert zugewiesen ist, und auf die Elementarflächen stützt, denen ein zweiter Binärwert zugewiesen ist.

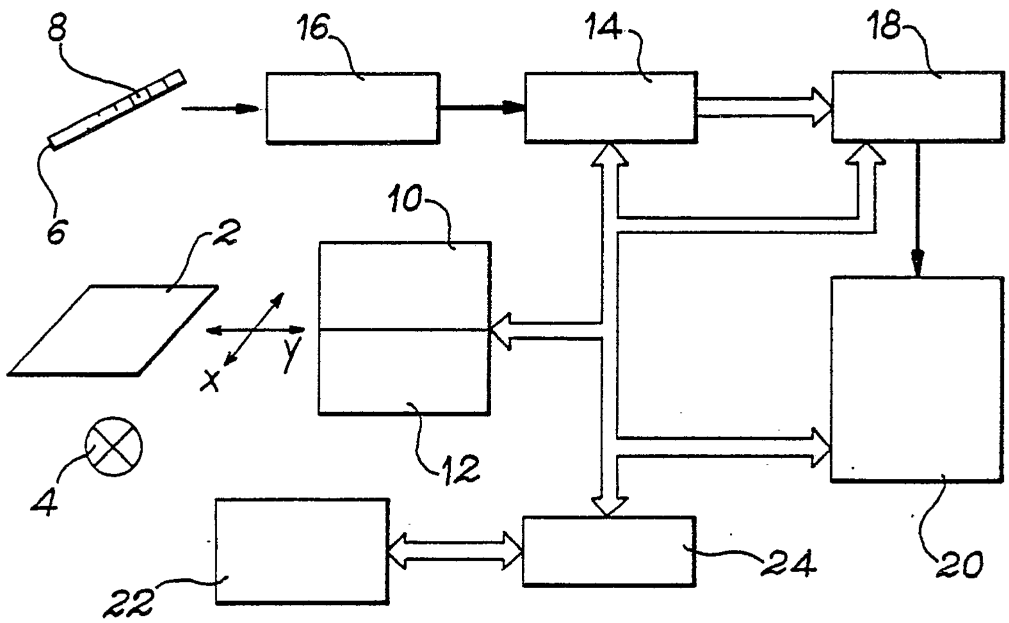
8
16
14
18
6
10
2
x
y
12
4
20
22
24

FIG. 1

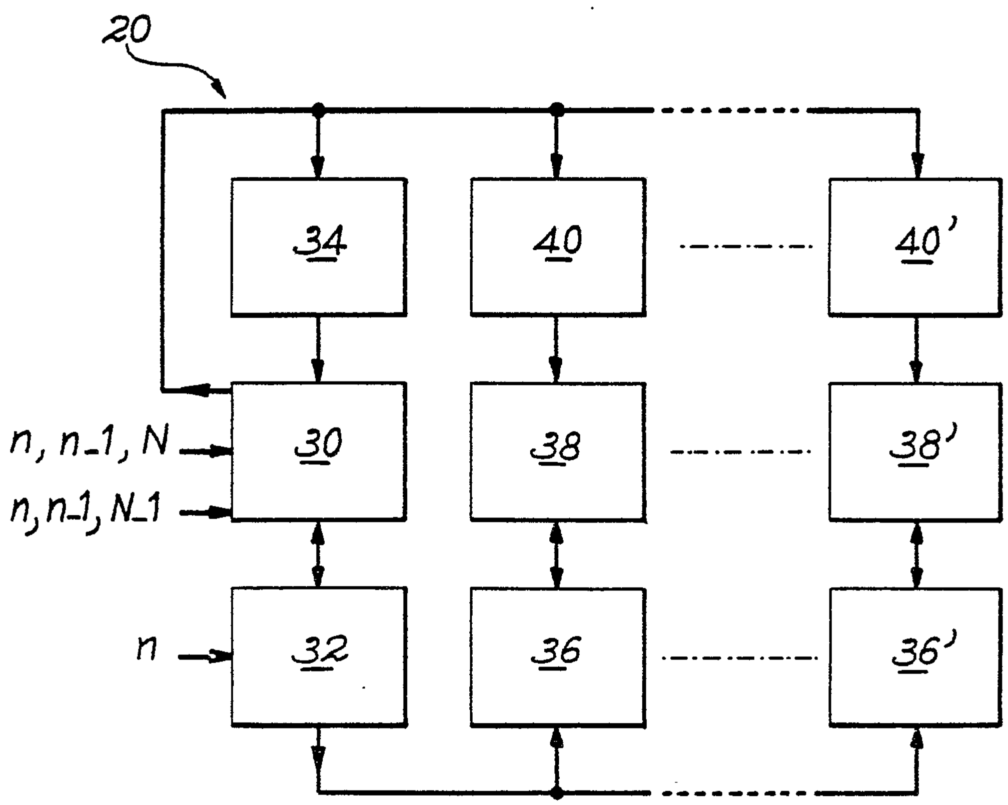
20
34
40
40'
30
38
38'
n, n-1, N
n, n-1, N-1
32
36
36'
n

FIG. 2

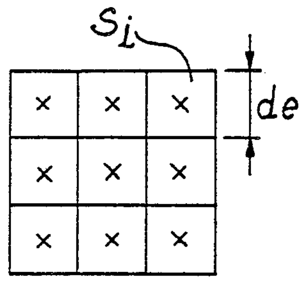


FIG. $3_a$

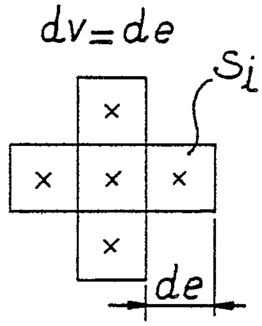


FIG. $3_b$

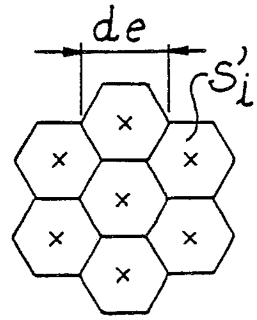


FIG. $3_c$

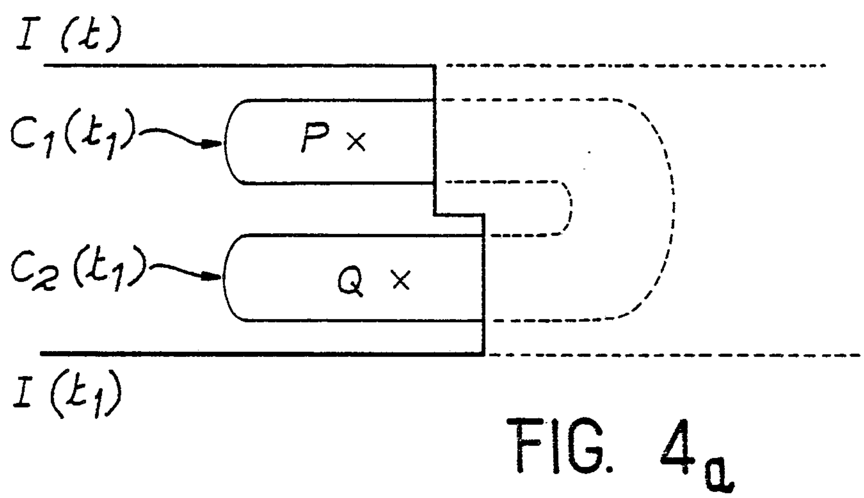


FIG. $4_a$

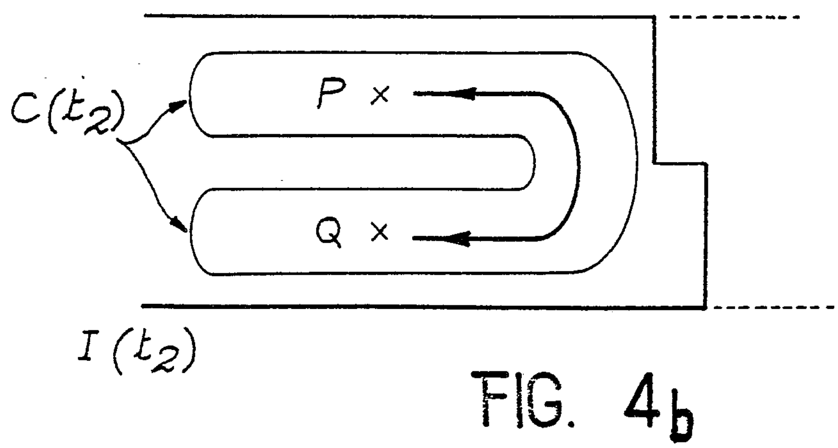


FIG. $4_b$

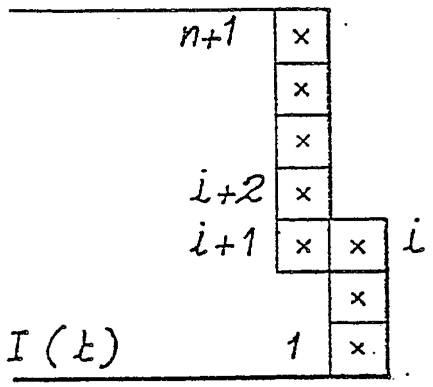


FIG. 5a

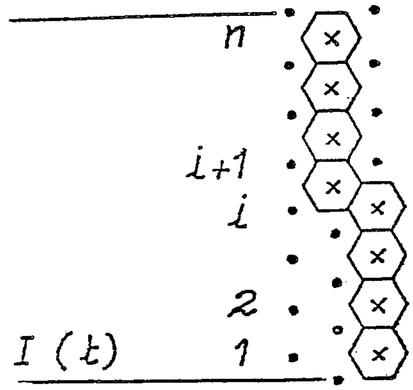


FIG. 5b

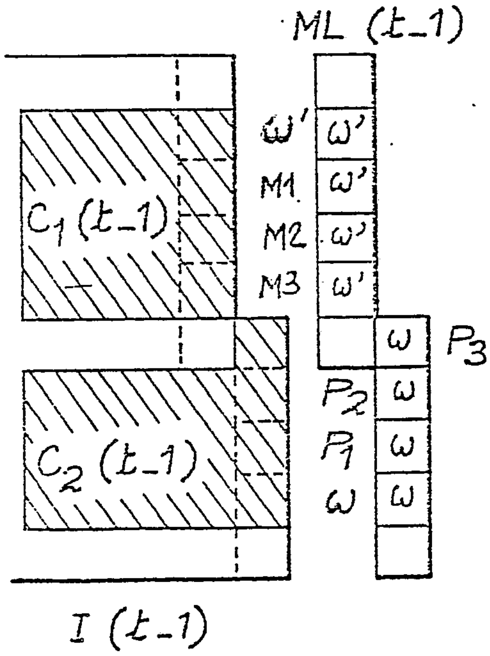


FIG. 6a

FIG. 6b

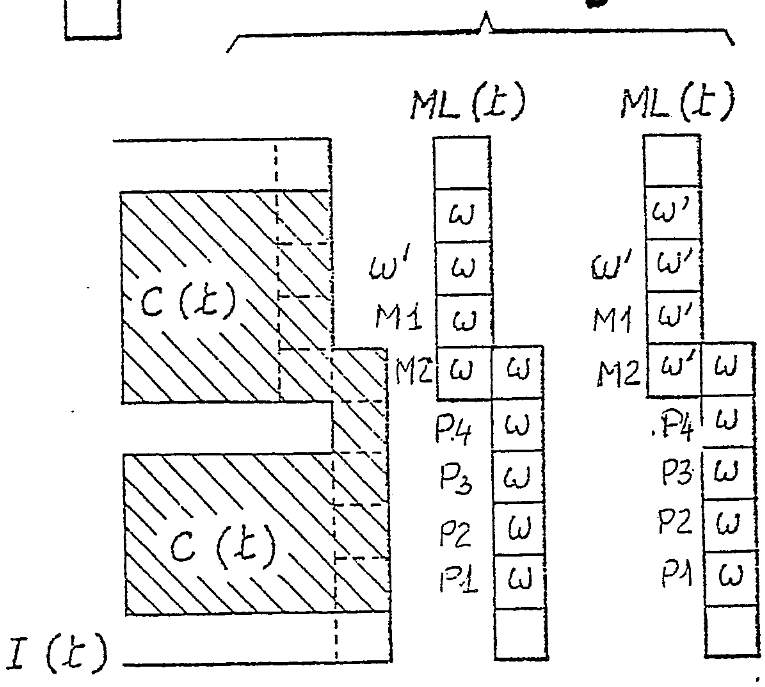

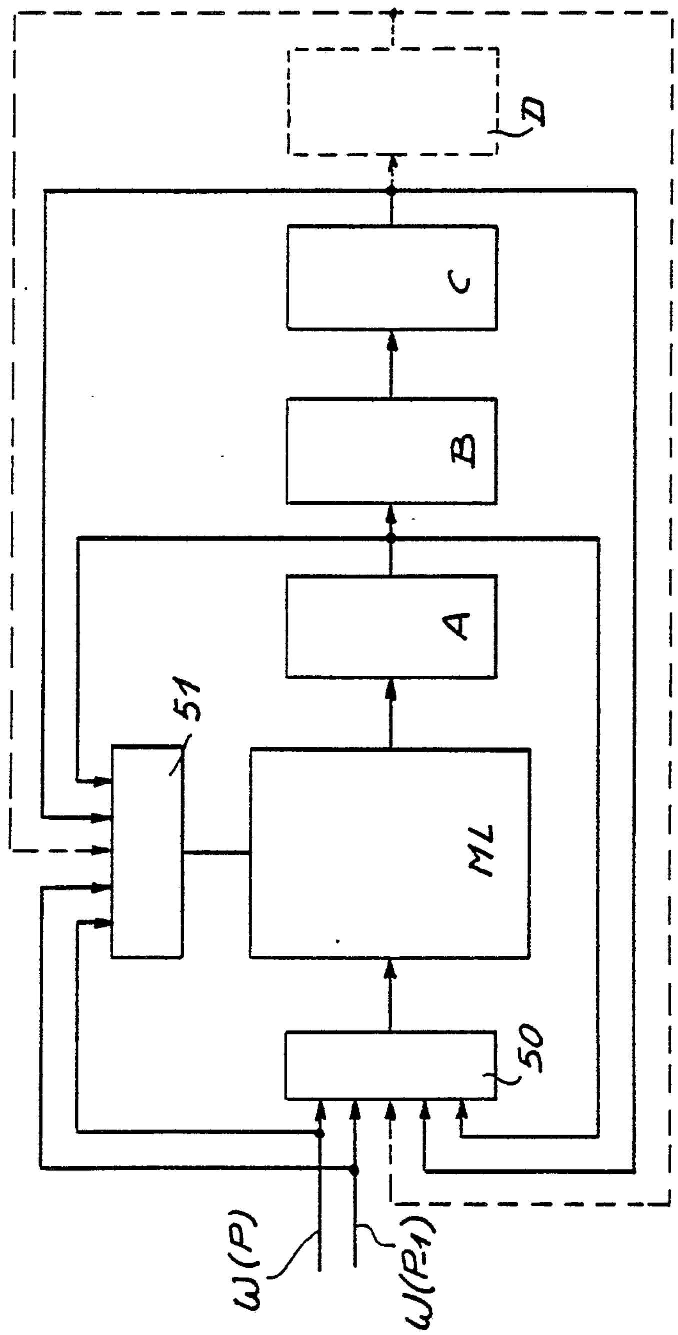


FIG.7